# Europäisches Patentamt
## European Patent Office
### Office européen des brevets

(19)

(11) Veröffentlichungsnummer: **0 019 080**
**B1**

(12) **EUROPÄISCHE PATENTSCHRIFT**

(45) Veröffentlichungstag der Patentschrift: **22.06.83**

(51) Int. Cl.³: **G 06 K 15/10**

(21) Anmeldenummer: **80101878.9**

(22) Anmeldetag: **08.04.80**

(54) **Einrichtung zum Bedrucken von Belegen.**

(30) Priorität: **12.04.79 DE 2914968**

(43) Veröffentlichungstag der Anmeldung:
**26.11.80 Patentblatt 80/24**

(45) Bekanntmachung des Hinweises auf die Patenterteilung:
**22.06.83 Patentblatt 83/25**

(84) Benannte Vertragsstaaten:
**AT BE CH DE FR GB IT LI LU NL SE**

(56) Entgegenhaltungen:
**DE - A - 2 134 891**
**DE - A - 2 607 580**
**DE - A - 2 654 503**
**DE - B - 1 935 805**

(73) Patentinhaber: **Firma Joachim W. Pixa**
**Siemensstrasse 32**
**D-7053 Kernen (DE)**

(72) Erfinder: **Pixa, Joachim W.**
**Siemensstrasse 32**
**D-7053 Kernen (DE)**

(74) Vertreter: **Patentanwälte Ruff und Beier**
**Neckarstrasse 50**
**D-7000 Stuttgart 1 (DE)**

Courier Press, Leamington Spa, England.

EP 0 019 080 B1

Einrichtung zum Bedrucken von Belegen

Die Erfindung betrifft eine Einrichtung zum Bedrucken von Belegen, wobei die Druckeinrichtung wenigstens einen im wesentlichen in Druckrichtung feststehenden Matrix-Druckkopf enthält, an dem die Belege kontinuierlich laufend auf einer geradlinigen Transportstrecke unter Verwendung mindestens eines Reibradpaares vorbeibewegbar sind, wobei der Druckkopf mit einer Gegendruckwalze zusammenarbeitet, die tangential zur Transportstrecke angeordnet ist und wobei der Druckkopf von einem Impulsgeber in Abhängigkeit von der Beleglaufgeschwindigkeit steuerbar ist.

Die DE—A—26 54 503 zeigt eine derartige Einrichtung, die eine während des Druckvorganges kontinuierlich laufende Bahn zur Beschriftung von Fahrkarten bedruckt, die am Ende des Druckvorganges abgeschnitten werden. Einzelbelege können mit der Einrichtung nicht bedruckt werden, vor allem keine mehrlagigen Belege wie Hefte o. dgl.

Aus der DE—A—26 07 580 ist ein Matrix-Drucker bekannt geworden, dessen Druckkopf zum Drucken quer zur schrittweise bewegten, zu bedruckenden Bahn hin- und herbewegbar ist. Eine Abtastrolle läuft auf der Bahn mit dem Druckkopf hin und her und hält den Druckkopf im richtigen Abstand zur Bahn. Die hin- und hergehende Arbeitsweise des Druckkopfes ist für hohe Beleg- und Druckgeschwindigkeiten ungeeignet.

Eine Druckeinrichtung für einen Kartendrucker einer elektronischen Datenverarbeitungsanlage ist aus der DE—A—21 34 891 bekannt geworden. Diese Druckeinrichtung dient zum sichtbaren Ausschreiben von auf einer Magnetkontokarte aufgezeichneten Daten auf diese Karte. Dazu wird die Karte an den Außenumfang einer großen Trommel angelegt, die an dem Druckkopf vorbeirotiert, so daß mehrere Zeilen nacheinander geschrieben werden können. Diese Einrichtung ist nur für kartenförmige Belege, nicht aber für Hefte etc. geeignet und hat einen großen Raumbedarf.

Obwohl Matrix-Drucker sehr hohe Druckgeschwindigkeiten erzielen können, konnten sie bisher für maschinenlesbare Belege (OCR-Belege) nicht eingesetzt werden, weil die Druckqualität dazu nicht ausreichte. Das galt einerseits für die geforderte Randschärfe der Zeichen, vor allem aber für die genaue und verzerrungsfreie Zeichenform, deren Nichteinhaltung zu folgenschweren Fehlerkennungen von Zeichen führen könnte.

Aufgabe der Erfindung ist es, eine Druckeinrichtung zu schaffen, die bei hoher Beleglaufgeschwindigkeit im "fliegenden Druck" Zeichen auf blatt-, stapel- oder heftförmige Einzelbelege drucken kann, die den Anforderungen für maschinenlesbare Schriften genügen.

Diese Aufgabe wird gemäß der Erfindung dadurch gelöst, daß die Druckeinrichtung zum Bedrucken einzelner stapel- oder heftförmiger OCR-Belege mit maschinenlesbaren Zeichen ausgebildet ist, daß die Gegendruckwalze drehbar angetrieben ist und die Beleggeschwindigkeit bestimmt und mit dem Impulsgeber für die Druckkopf-Steuerung versehen ist, daß in der Transportstrecke vor und hinter der Gegendruckwalze jeweils ein aus wenigstens einem aufeinanderzu gedrückten, die Vorder- und Rückseite der Belege erfassenden Reibradpaar bestehender Reibtransporteur angeordnet ist, der mit der gleichen Umfangsgeschwindigkeit angetrieben ist wie die Gegendruckwalze, und daß der wenigstens eine Druckkopf senkrecht zur zu bedruckenden Fläche bewegbar ist und von wenigstens einer den Beleg an die Gegendruckwalze andrückenden und in Belegtransportrichtung laufenden Abtastrolle entsprechend der Belegstärke auf den richtigen Druckspalt gegenüber der Gegendruckwalze einstellbar ist.

Die Belege werden auf einer geradlinigen Transportbahn geführt, so daß auch stapel- oder heftförmige Belege faltenfrei durch die Druckeinrichtung geführt werden können. Während die Reibtransporteure dafür sorgen, daß die Belege mit einer schon recht genau der Soll-Geschwindigkeit entsprechenden Geschwindigkeit der Gegendruckwalze zugeführt und von dieser abgezogen werden, sorgt die mit dem Druckvorgang synchronisierte Gegendruckwalze, an die die Belege mit Hilfe der Abtastrolle angedrückt werden, für die hochgenaue Einhaltung der Beleggeschwindigkeit, die zum verzerrungsfreien Druck nötig ist. Die Abtastrolle erfüllt zusätzlich die Funktion, den Druckkopf auf die unterschiedlichen Belegdicken automatisch einzustellen.

Vorzugsweise sind Reibtransporteure vorgesehen, die zwei übereinander anliegend angeordnete Reibradpaare aufweisen, wobei je eines der Reibräder jedes Paares angetrieben und das andere frei drehbar ist und die beiden frei drehbaren Reibräder an einem Schwenkträger kardanartig gelagert sind. Dadurch können sie sich dicken Unterschieden im Beleg anpassen und in jeder Position an die Belege anlegen. Sie können dabei die Belege nicht nur transportieren, sondern auch so führen, daß nahezu eine Einspannung vorliegt, die Verschiebungen oder Geschwindigkeitsverzerrungen ausschließt. Bei den in der Einrichtung beschrifteten OCR-Belegen ist die Gefahr einer Verschiebung groß, die zu einer Verzerrung der Schriften führen würde und das dafür gesorgt hat, daß bisher OCR-Schriften nur auf stationär positionierte Belege aufgebracht werden konnten.

Weitere Vorteile und Merkmale von bevorzugten Ausführungsformen der Erfindung gehen aus den Unteransprüchen und der Beschreibung im Zusammenhang mit den Zeichnungen hervor. Ein Ausführungsbeispiel der Erfindung ist in der Zeichnung dargestellt und wird im folgenden näher erläutert.

Es zeigen:

Fig. 1 eine schematische Frontansicht einer Beleg-Bearbeitungsmaschine (OCR-Codiergerät),

Fig. 2 eine Draufsicht auf das Gerät nach Fig. 1,

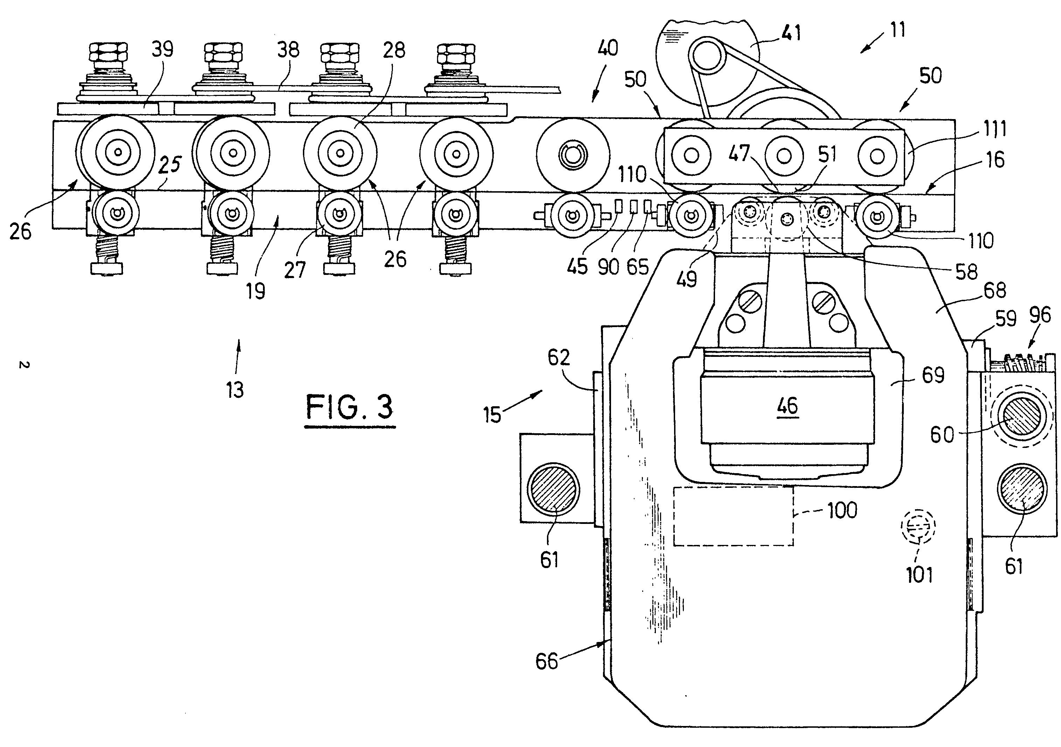

Fig. 3 eine Draufsicht auf einen Teil des Gerätes (ohne Gehäuse und Rahmen),

Fig. 4 eine Frontansicht des in Fig. 3 gezeigten Gerätes ohne Druckeinrichtung und

Fig. 5 eine schematische Seitenansicht einer Druckeinrichtung, die eine Variante enthält.

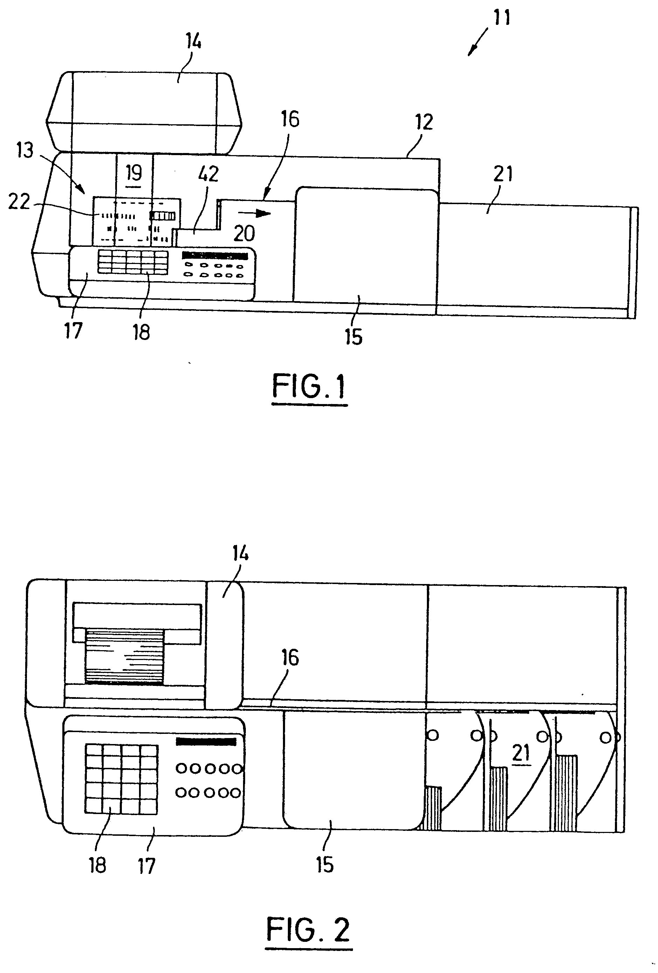

Das in Fig. 1 und 2 in seiner Außenansicht und Draufsicht dargestellte Belegbearbeitungsgerät 11 ist ein Universalgerät, das in entsprechender Ausrüstung als OCR-Mehrfeld-Konstantencodierer, OCR-Schalterquittungs-Codiergerät oder OCR-Codierplatz (z.B. intern in einem Geldinstitut) eingesetzt werden kann. Das Gerät ist baukastenartig aus folgenden Einrichtungen oder Baugruppen zusammengesetzt:

Einem Grundgerät 12 mit einer Positioniereinrichtung 13, einem aufgesetzten Abstapler 14, einer horizontal neben der Postioniereinrichtung 13 angeordneten Druckeinrichtung 15, die mit der Positioniereinrichtung durch eine im wesentlichen horizontal verlaufende Transportstrecke 16 verbunden ist, einer abnehmbar an dem Grundgerät vor dem Eingabebereich 19 der Positioniereinrichtung angeordneten Eingabe- und Steuereinrichtung 17 mit einer Tastatur 18 und ggf. einer in Belegtransportrichtung 20 hinter dem Druckwerk 15 angeordneten Sortier- und Stapeleinrichtung 21, die wahlweise an das Grundgerät angeschlossen werden kann und auf beliebig viele Sortierfächer erweiterungsfähig ist.

Bei den zu bearbeitenden Belegen handelt es sich meist um sog. OCR-Belege, d.h. Belege, die normalerweise im Zahlungsverkehr verwendet werden und mit alphanumerischen Zeichen bedruckt oder zu bedrucken sind, die auch maschinell lesbar sind. Das Hauptanwendungsgebiet liegt also bei der Bearbeitung von Scheck- und Überweisungsvordrucken, Sparbüchern o. dgl. Im folgenden ist der Einfachheit halber unter Beleg jedes zu bedruckende, zu sortierende, zu lesende oder auf andere Art zu bearbeitende Schriftstück zu verstehen, das blatt-, stapel- oder heftartig ist.

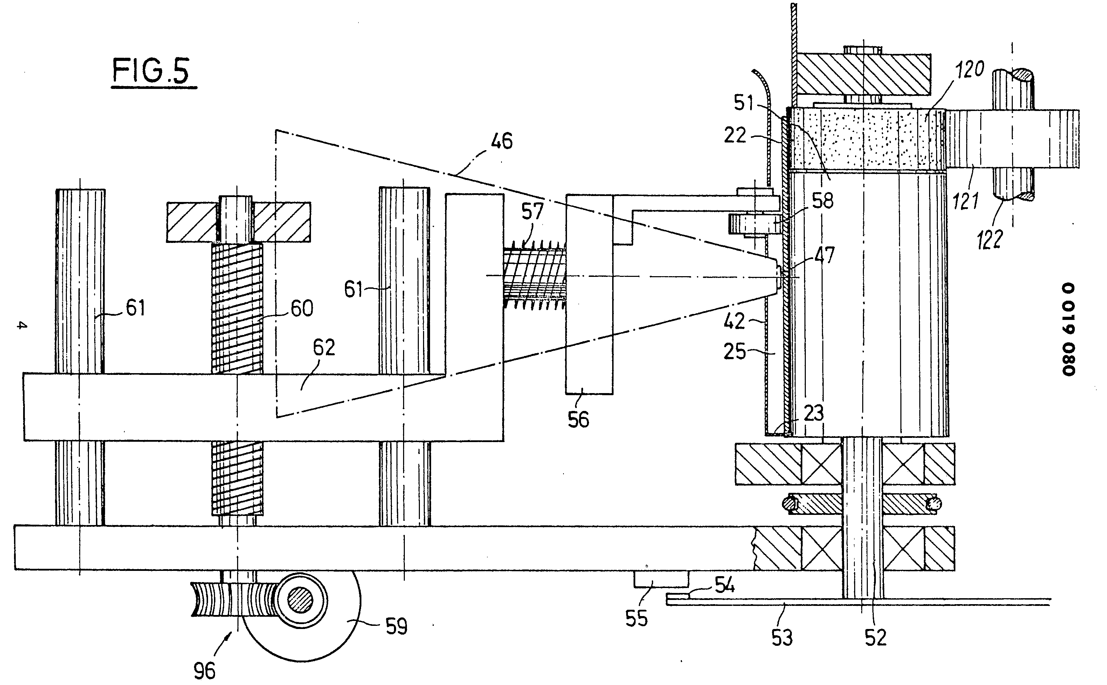

Die Positioniereinrichtung 13 dient dazu, Belege 22, die am Eingabebereich 19 entweder vom Abstapler 14 oder manuell zugeführt werden, zu einer nachfolgenden Bearbeitung, im vorliegenden Beispiel zum Bedrucken durch die Druckeinrichtung 15, genau zu positionieren, d.h. längs einer horizontal verlaufenden Führungsbahn 23 (Fig. 5) auszurichten und derart ausgerichtet horizontal zu transportieren. Der Abstapler, der beispielsweise nach der europäischen Patentanmeldung

EP—A—0 017 227 aufgebaut sein kann, läßt die Belege nacheinander einzeln mit im wesentlichen vertikaler Ausrichtung ihrer Flächen im Eingabebereich fallen, wobei normalerweise die untere Längskante 24 der Belege 22 in etwa horizontal ausgerichtet ist. Sie fallen dabei, wie aus Fig. 5 zu erkennen ist, im Bereich eines vertikalen, jedoch horizontal langgestreckten Transportschlitzes 25 auf Positionier-Reibtransporteure, die bei der vorliegenden Ausführungsform als Sätze voneinander gegenüberliegenden Reibrädern aus Gummi oder einem anderen elastischen Material mit gutem Reibkoeffizienten ausgebildet sind.

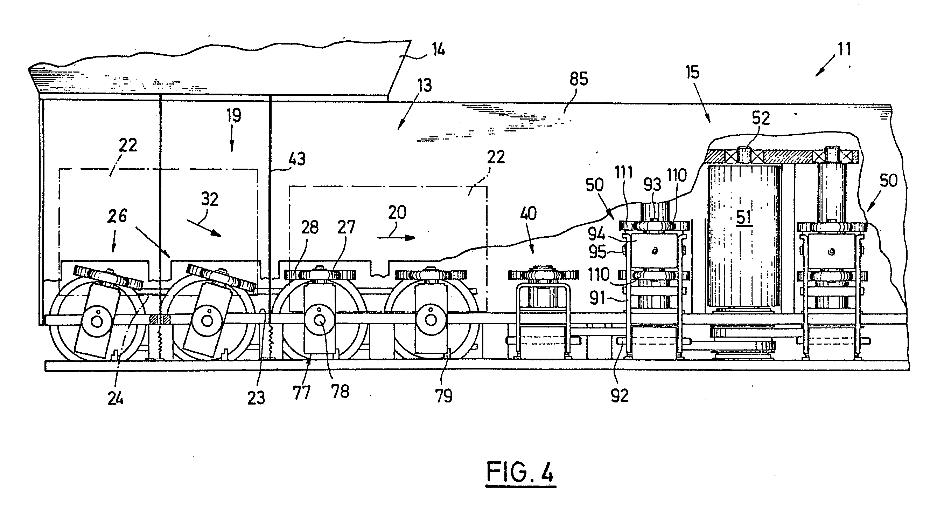

Aus Fig. 4 ist zu erkennen, daß längs des Führungsschlitzes 25, der zusammen mit der Führungsbahn 23 (dem Boden des Schlitzes) bei der Bewegung der Belege in Transportrichtung 20 die Transportstrecke 16 bildet, insgesamt vier in ihrer Transportrichtung veränderbare Positionier-Reibtransporteure 26 und weitere Transport-Reibtransporteure 40 mit horizontaler Förderrichtung angeordnet sind.

Die richtungsveränderlichen Positionier-Reibtrans-porteure 26 sind jeweils durch einander gegenüberliegende Reibräder 27, 28 gebildet, die um Achsen drehbar sind, die an einem Träger 77 angebracht sind. Der Träger 77 ist um eine horizontale, quer zur Erstreckung der Führungsbahn 23 unterhalb dieser verlaufende Achse 78 begrenzt schwenkbar, und zwar zwischen einer Stellung, in der die Achsen der Reibräder die in Fig. 4 links dargestellte Schräge einnehmen und einer durch einen Anschlag 79 begrenzten Stellung, in der die Reibräder-achsen senkrecht sind (in Fig. 4 der dritte und vierte Reibtransporteur 26). Die Förderrichtung der Reibtransporteure ist bei ihrer Schrägstellung schräg abwärts gerichtet (Pfeil 32) und entspricht bei ihrer Geradeaus-Stellung der Haupttransportrichtung (Pfeil 20). Die maximale Schrägstellung beträgt vorzugsweise 15°, kann jedoch je nach den Erfordernissen zwischen 5 und 30° variieren.

Diese Positioniereinrichtung sorgt aufgrund ihrer unter Reaktionskraft zurückschwenkenden Positionierungs-Reibtransporteure für eine genaue schnelle und schonende Ausrichtung unterschiedlichster Belege während ihres Transportes zu der nachfolgenden Druckeinrichtung und ist im einzelnen in der EP—A—0 019 079 beschrieben.

Im Bereich der Positioniereinrichtung 13 bzw. der Transportstrecke 16 sind mehrere Fühler 45 in Form von Fotozellen angebracht, die durch Abtasten der Vorder-, Hinter- bzw. Überkante der Belege deren Größe und damit Art feststellen und zur Steuerung der Druckeinrichtung bezüglich der zu beschriftenden Position (Zeile) steuern und nach entsprechender Zwischenspeicherung die Lenkung der Belege in das ihnen zugehörige Fach der Sortier- und Stapeleinrichtung 21 steuern. Zusätzlich ist ein Fühler 90 vorgesehen, der auf kapazitivem Wege die Dicke des Beleges mißt und damit eine Sicherheit gegen eventuelles doppeltes Einziehen von Belegen schafft. Er schaltet bei Feststellung doppelt liegender Belege den Transport und damit die Druckeinrichtung ab. Die Druckeinrichtung 15 besitzt einen Matrix-Druckkopf 46 üblicher Bauart. Er besitzt als schriftbildende Elemente eine Anzahl (normalerweise neun) vertikal übereinander angeordneter Nadeln, die aus seiner Frontfläche 47 unter der Wirkung von den einzelnen Nadeln zugeordneten Elektromagneten mit großer Präzision und nötigenfalls in kurzer Folge herausgetrieben werden.

Der Druckkopf 46 ist in Zeilenrichtung (Transportrichtung 20) fest angeordnet und der Beleg 22 bewegt sich kontinuierlich auf einer im wesentlichen geradlinigen Bahn an ihm vorbei. Durch die in kürzester Folge gesteuert anschlagenden Nadeln wird auf dem vorbeibewegten Beleg über ein Farbband 49 ein Schriftzeichen erzeugt. Es ist zu bemerken, daß für die OCR-Technik die Qualität der Schriftzeichen, ihre Verzeichnungsfreiheit und gleichmäßige Einfärbung außerordentlich hohen Anforderungen genügen muß. Schon eine geringfügige Änderung der Relativgeschwindigkeit zwischen Druckkopf und Beleg würde zu einer Verzerrung der Zeichen führen, die bei der maschinellen Lesung zu Fehlerkennungen oder zu der Notwendigkeit führen würden, den Beleg manuell nachzucodieren. Erstaunlicherweise gelingt es, diese hohen Anforderungen trotz des kontinuierlichen, freien Beleg-Durchlaufes mit hoher Geschwindigkeit zu erfüllen, wozu die im folgenden beschriebenen Merkmale beitragen.

Auf der Transportstrecke 16 sind ein in Transportrichtung 20 wirkender Transport-Reibtransporteur 40 und beiderseits des Druckkopfes zwei weitere, ebenfalls horizontal fördernde Reibtransporteure 50 vorgesehen, die jedoch (Fig. 4) den Beleg mit jeweils zwei übereinander angeordneten Reibradpaaren ergreifen. Die Reibtransporteure 50 haben, ebenso wie der Reibtransporteur 40 einen Schwenkträger 91, der um eine unten liegende, horizontale Achse 92 durch eine Federkraft schwenkbar ist und für den Andruck der frei drehbaren, der Bedienungsseite zugewandten Reibräder sorgt. Um einen besonders gleichmäßigen Andruck dieser frei drehbaren Reibräder 110 an die angetriebenen, größeren, hinteren Reibräder 111 sicherzustellen, sind beim Reibtransporteur 50 die frei drehbaren Reibräder kardanartig gelagert, indem ihre im wesentlichen vertikalen Achsen 93 an einem Kardanstück 94 befestigt sind, das seinerseits um eine horizontale Schwenkachse 95 zwischen zwei Schenkeln des Schwenkträgers 91 drehbar ist. Durch den gleichmäßigen Andruck an zwei übereinanderliegenden Stellen wird der Beleg an mehreren Stellen gleichzeitig eingespannt gehalten, so daß keine die Schriftqualität beeinträchtigenden Verwerfungen im Bereich der Druckeinrichtung zu befürchten sind.

Die Beleggeschwindigkeit wird in erster Linie von einer Gegendruckwalze 51 bestimmt, die dem Druckkopf gegenüber in den Transportschlitz 25 hineinragt und um eine vertikale Welle 52 von dem Antriebsmotor 41 angetrieben ist, der auch die Reibtransporteure 26 über die Riemen 38 und die Reibtransporteure 40, 50 vorzugsweise direkt von der Welle 52 über Riemen treibt. Die Gegendruckwalze 51 reicht über die gesamte mögliche Beschriftungshöhe. Es handelt sich um eine hohle Stahlwalze, die zur Geräuschdämmung mit Kunststoffschaum ausgefüllt sein kann. Aus Fig. 5 ist zu erkennen, daß mit ihrer Welle 52 unmittelbar eine Inkrementalscheibe 53 verbunden ist, die auf ihrem Umfang Abtastmarken 54 besitzt, die von einem Abtastkopf 55 in elektrische Signale umgewandelt werden können. Es kann sich um optische, induktive, magnetische oder andere Fühler handeln und dementsprechend sind die Marken ausgebildet.

In direkter Abhängigkeit von den Signalen des Abtastkopfes 55 wird der Druckvorgang gesteuert, d.h. die von einer Steuerelektronik vorgewählte Nadelkombination wird in Abhängigkeit von einem Taktsignal ausgelöst, das von dem Abtastkopf stammt oder von ihm gesteuert wird. Dadurch wird sichergestellt, daß der Druck in unmittelbarer Abhängigkeit von der Beleggeschwindigkeit erfolgt, so daß Zeichenverzerrungen oder ein unsauberer Abdruck ausgeschlossen sind. Die Gegendruckwalze 51 wird in gleicher Umfangsgeschwindigkeit angetrieben wie die Beleggeschwindigkeit im übrigen Teil der Transportstrecke.

Besonders wichtig ist im Zusammenhang mit dem Druckkopf auch eine Über-wachung, ob die in Abhängigkeit von der Tastatur oder der Ausgabe eines Rechners mikroprozessorgesteuert vorgewählte Nadelkombination auch tatsächlich bei Vorliegen des Taktsignales angeschlagen wird. Dies geschieht bei der vorliegenden Vorrichtung durch eine Kontrolleinrichtung, die überwacht, ob die ausgewählte Nadel auch tatsächlich den vorgesehenen Stromimpuls erhält. Eine noch ummittelbare Überwachung könnte durch mechanische oder optische Überwachung der Nadelbewegung oder eventuell sogar eine optische Überprüfung des angeschlagenen Zeichens erfolgen.

In Fig. 5 ist schematisch dargestellt, daß der dort nur strichpunktiert angedeutete Druckkopf 46 an einem Träger 56 befestigt ist, der senkrecht zur zu bedruckenden Fläche des Beleges 22, d.h. horizontal und quer zur Transportrichtung verschiebbar ist und durch eine Feder 57 in Richtung auf die Gegendruckwalze gedrückt wird. Der richtige Druckspalt wird entsprechend der Belegdicke dadurch nachgeregelt, daß an dem Träger 56 eine den Beleg 22 gegen die Gegendruckwalze 51 drückende Andrückrolle 58 vorgesehen ist. Der Druckkopf 46 ist in seiner Höhenlage elektromotorisch verstellbar, indem ein Verstellmotor 59 über einen Schneckentrieb 96 eine Verstellspindel 60 antreibt, die einen auf zwei Führungssäulen 61 laufenden Verstellschlitten 62 in senkrechter Richtung bewegen kann. Ein nicht dargestelltes Linearpotentiometer mißt die Höhenlage des Druckkopffes 46 und liefert den Ist-Wert für einen elektronischen Vergleich mit den Sollwerten zur genauen Einstellung vorherbestimmter Höhenlagen des Druckkopfes. Diese Verstellung kann sowohl manuell von der Tastatur aus vorgewählt werden, als auch in Abhängigkeit von Vorgängen von dem Rechner bestimmt werden. Es ist sogar möglich, die Verstellung während des Beleg-durchlaufes vorzunehmen. Es ist dann beispielsweise möglich, zuerst in einer Zeile Kennziffern zu drucken und mit einem kleinen horizontalen Abstand, der zum Verfahren des Druckkopfes in eine andere Zeile benötigt wird, auf demselben Beleg in einer anderen Zeile einen Betrag einzudrucken. Es ist auch möglich, mehrere Druckköpfe übereinander anzuordnen, die zusammen oder unabhängig voneinander verstellbar sein können.

Dem Druckkopf vorgeschaltet sind Fotofühler 65, die ermitteln, ob der Beleg in der zu beschriftenden Zeile (und ggf. in dem zu beschriftenden Teil der Zeile) schon eine Beschriftung trägt. In diesem Falle würde der Drucker blockiert und/oder ein entsprechendes Signal ausgelöst werden. Es wird somit vermieden, daß Angaben überdruckt werden. Diese Fotofühler könnten zusammen mit dem Druckkopf höhenverstellbar angeordnet sein oder es könnte für jede zu beschriftende Zeile ein Fotofühler vorgesehen sein, der im voraus ermittelt, welche Zeile des Beleges bereits eine Beschriftung trägt. Die allgemeine Steuer- und Auswertelektronik, die sich normalerweise in der Eingabe- und Steuereinrichtung 17 befindet, könnte dann in Abhängigkeit davon auch bei einer Höhenverstellung des Druckkopfes während des Durchlaufes eines Beleges ermitteln, ob die jeweilige Zeile zur Beschriftung frei ist.

Das Farbband 49 ist in einer austauschbaren Farbbandkassette 66 enthalten. Das Farbband wird durch relativ lange, den Druckkopf beidseitig umgreifende, auf die Druckstelle zu gerichtete Arme 68 geführt, an deren Enden sich Führungsrollen befinden. Diese Arme bilden zwischen sich einen Raum 69, in dem der Druckkopf 46 liegt. Das Farbband läuft dann über zwei Führungsrollen rechts und links der eigentlichen Druckstelle 47. Diese Kassette ist optimal den Bedingungen angepaßt und kann vorteilhaft mit einem besonders eng gewebten Gewebeband bestückt sein.

Die Farbbandkassette enthält vorteilhaft eine endlose Schlaufe des Farbbandes 49 und eine nachfärbeeinrichtung. Dazu ist in der Farbbandkassette 66 ein strichliert angedeuteter Nachfärbetank 100 vorgesehen, aus dem das Farbband, wenn es von dem Farbbandantrieb 101 transportiert wird, nachgefärbt wird, nach dem es durch besondere Umlenkung und Streckung für die Farbe aufnahmefähig gemacht wurde. Eine solche Farbbandkassette liefert eine ausgezeichnete Druckqualität und hat ein mehrfaches der Lebensdauer einer üblichen Farbbandkassette. Es wäre möglich, durch eine elektro-optische Nachkontrolle des Abdruckergebnisses die Regelung der Farbbandgeschwindigkeit oder die Warnung bzw. Abschaltung auszuführen.

Die Arme 68 reichen bis nahe an den Druckkopf heran, so daß nur ein sehr geringer Teil des Farbbandes frei liegt und das Farbband nicht austrocknen kann. Es ist zu erkennen, daß die Farbbandkassette durch ihre Form eine außerordentlich gute Führung gibt und sich den räumlichen Verhältnissen optimal anpaßt. Sie kann beispielsweise von oben her über den Druckkopf geschoben werden.

Die beschriebene Einrichtung hat zahlreiche Vorteile. Es ist ohne weiteres möglich, Belege unterschiedlicher Höhe und Breite sowie mit Papiergewichten zwischen 40 und 500 g/m² ohne vorherige Umstellung durch die Positionier- und Druckeinrichtung laufen zu lassen. Dies ist ein wesentlicher Vorteil gegenüber bisherigen Einrichtungen, bei denen die Belege zumindest in der Druckeinrichtung genau positioniert und festgehalten werden mußten. Es erforderte nicht nur die dauernde Umstellung der Anschläge für unterschiedliche Beleggrößen, sondern verlangsamte auch den Druckbetrieb, wobei ferner zu beachten war, daß der Druckkopf nach jeder Zeile leer wieder zurückbewegt werden mußte. Durch den kontinuierlichen Belegdurchlauf mit hoher Beleglaufgeschwindigkeit kann bei gleichbleibender und sogar verbesserter Druckqualität die Leistung um das Vielfache (auf das Drei- bis Fünffache) gesteigert werden. Es läßt sich eine genaue Zeichenwiedergabe erreichen, indem trotz einer Steigerung der Druckgeschwindigkeit die einzelnen Nadelpunkte enger gesetzt werden können. Es ist vor allem möglich, Belege zu verarbeiten, die nahezu unmittelbar aneinander angrenzend durch die Einrichtung hindurchlaufen. Der konstante Durchlauf und das Vermeiden von Umschaltungen oder Rückführungen sorgt für einen schwingungs- und geräuscharmen Betrieb der Maschine, was einen wesentlichen Vorteil mit sich bringt, da normalerweise viele derartige Geräte in akustisch besonders ungünstigen, öffentlich zugänglichen Räumen eingesetzt werden (Schalterhallen), in denen Maschinengeräusche stören. Der Matrix-Druckkopf kann seine volle, sehr hoch liegende Druckgeschwindigkeit ausnutzen, da er bei dicht an dicht kommenden Belegen praktisch ununterbrochen arbeiten kann. Die für die OCR-Lesung wichtige Genauigkeit in der Zeilenlage und -ausrichtung ist dadurch gegeben, daß während des gesamten Druckvorganges die untere Kante 24 des Beleges 22 auf der Führungsbahn 23 läuft.

Im Verlaufe der horizontalen Transportstrecke könnten auch andere Einrichtungen vorgesehen werden, es könnten beispielsweise zusätzliche zu der Druckeinrichtung eine Leseeinrichtung oder ein Kontrollzeichendrucker eingebaut werden. Obwohl die Anordnung der Eingabe und Steuereinrichtung, die auch die gesamte Steuerelektronik für den Drucker enthalten kann, sehr klein (in der Größe eines normalen Tischrechners) aufgebaut und daher am Belegbearbeitungsgerät selbst angebracht sein kann, ist es auch möglich, die Eingabe- und Steuereinrichtung abzunehmen und an anderer Stelle anzuordnen, wenn dies vom Arbeitsablauf her Vorteile bringt.

Infolge der Tatsache, daß der Druckkopf die Bedruckung während des Durchlaufs des Beleges vornimmt und während dieser ganzen Zeit arbeiten kann, ohne daß er in der zu bedruckenden Zeilenlänge begrenzt ist oder für das Bedrucken eines längeren Textes auf einer Zeile längere Zeit benötigt als für einen kurzen, kann z.B. beim Beleg-Codieren nicht nur, wie bisher üblich, die Kontonummer in die mit der fortlaufenden Schecknummer und Bankleitzahl versehenen Vordrucksätze eingedruckt werden, sondern alle diese Angaben können gleichzeitig und ohne zeitlichen Mehraufwand eingedruckt werden. So können einfache, nicht besonders vorbereitete Vordrucke verwendet werden und Schwierigkeiten wegen ungenauer Zeilenausrichtung zwischen den vor- und eingedruckten Teilen der OCR-Daten entfallen.

Vorteilhaft wird man bei den Reibtransporteuren so viele Reibrad-Paare vorsehen, daß ein Beleg stets mindestens von zei Reibrad- Paaren erfaßt wird. Es ist jedoch auch möglich, mit nur einem den Beleg erfassenden Reibrad- Paar auszukommen, wenn die Belege ausreichend steif sind.

Ein Vorteil der Einrichtung gegenüber Konstanten-Codierern mit einem Typendruckwerk ist die Tatsache, daß ohne maschinelle Umstellung beliebige Schriftarten und Zeichen geschrieben werden können, indem einfach ein anderes Programm aus der elektronischen Steuerung des Druckwerkes abgerufen oder in diese eingespeichert wird.

In Fig. 5 ist zu erkennen, daß es auch möglich ist, mit dem Druckkopf 46 oder vorzugsweise mit einem nicht dargestellten, darüber angeordneten zweiten Druckkopf einen Aufdruck auf die Rückseite des Beleges 22 aufzubringen. Das ist bei Bankbelegen für Sicherungsentwertungsaufdrucke wichtig. Dazu ist im dargestellten Beispiel ein oberer Bereich 120 der Gegendruckwalze 51 durch Sandstrahlen aufgerauht und arbeitet mit einer mit Farbe getränkten Farbauftragsrolle 121 zusammen, die im Bereich 120 an- und abschwenkbar um eine zur Gegendruckwalze 51 parallele Welle 122 gelagert ist und Farbe auf den Bereich 120 aufträgt. Wenn der Druckkopf von der Vorderseite des Beleges 22 (in Fig. 5 von links) anschlägt, dann wird an diesen Stellen die Farbe auf die Belegrückseite übertragen und erzeugt dort ein Zeichen, das positiv oder negativ (weiß auf schwarz) ausgebildet sein kann. Eine flache Nut 123 sorgt für eine klare Abrenzung des eingefärbten Bereiches.

Wenn nur ein Rückseitenabdruck erwünscht ist. wird das Farbband 49 des Druckkopfes außer Stellung gebracht bzw. wird ein gesonderter Druckkopf ohne Farbbandkassette verwendet. Die Ausführung mit einem eingefärbten Bereich der Gegendruckrolle ist besonders bevorzugt, es wäre jedoch auch möglich, die Gegendruckrolle in dem Rückseiten- Druckbereich etwas abzusetzen und ein Farbband dort herumzuführen, das den Rückseitendruck vornimmt. Das hätte allerdings den Nachteil, daß das Farbband mit sehr großer Geschwindigkeit mit der Gegendruckrolle umlaufen sollte. Es wäre auch möglich, den Bereich 120 aus einem porösen Material anzufertigen. Die Farbauftragsrolle könnte, wenn z.B. bei einer nachfolgenden Belegserie statt der rückseiten- beschriftung nun eine Vorderseitenbeschrif- tung an der gleichen Stelle erwünscht ist, abgeschwenkt und noch anhaftende Farbe durch eine Löschrolle entfernt werden. Es entsteht der Vorteil, daß an der gleichen Druckstation sowohl Vorder- als auch Rückseitenbeschriftungen vorgenommen werden können, und zwar gleichzeitig oder eventuell mit dem gleichen Druckkopf. Dies erspart eine zweite Druckstation und verringert die Baulänge der Gesamteinrichtung erheblich. Die notwendige Steuerung des Druckkopfes zum Erzeugen einer Spiegelschrift erfolgt von der Steuereinrichtung 17 aus.

## Patentansprüche

1. Einrichtung zum Bedrucken von Belegen,
a) wobei die Druckeinrichtung (15) wenigstens einen im wesentlichen in Druckrichtung feststehenden Matrix-Druckkopf (46) enthält,
b) an dem die Belege (22) kontinuierlich laufend
c) auf einer geradlinigen Transportstrecke (16) unter Verwendung mindestens eines Reibrad-Paares vorbeibewegbar sind,
d) wobei der Druckkopf (46) mit einer Gegendruckwalze (51) zusammenarbeitet,
e) die tangential zur Transportstrecke (16) angeordnet ist, und
f) wobei der Druckkopf (46) von einem Impulsgeber (53) in Abhängigkeit von der Beleggeschwindigkeit steuerbar ist,
dadurch gekennzeichnet,
g) daß die Druckeinrichtung (15) zum Bedrucken einzelner, stapel- oder heftförmiger
h) OCR-Belege (22) mit maschinenlesbaren Zeichen ausgebildet ist,
i) daß die Gegendruckwalze (51) drehbar angetrieben ist und die Beleggeschwindigkeit bestimmt und
k) mit dem Impulsgeber (53) für die Druck- kopf-Steuerung versehen ist,

l) daß in der Transportstrecke (16) vor und hinter der Gegendruckwalze (51) jeweils ein aus wenigstens einem aufeinanderzu gedrückten, die Vorder- und Rückseite der Belege (22) erfassenden Reibrad-Paar (110, 111) bestehender Reibtransporteur (50) angeordnet ist,

m) der mit der gleichen Umfangsgeschwindigkeit angetrieben ist wie die Gegendruckwalze (51), und

n) daß der wenigstens eine Druckkopf (46) senkrecht zur zu bedruckenden Fläche bewegbar ist

o) und von wenigstens einer den Beleg an die Gegendruckwalze (51) andrückenden und in Belegtransportrichtung (20) laufenden Abtastrolle (58) entsprechend der Belegstärke auf den richtigen Druckspalt gegenüber der Gegendruckwalze (51) einstellbar ist.

2. Einrichtung nach Ansprüche 1, dadurch gekennzeichnet, daß die Reibtransporteure (50) jeweils zwei übereinander liegend angeordnete Reibrad-Paare (110, 111) aufweisen, daß je ein Reibrad (111) jedes Paares angetrieben und das andere Reibrad (110) frei drehbar ist und daß die beiden frei drehbaren Reibräder (110) an einem Schwenkträger (91) kardanartig gelagert sind.

3. Einrichtung nach einem der vorhergehenden Ansprüche, dadurch gekennzeichnet, daß die Gegendruckwalze (51) eine vorzugsweise mit einer Füllung aus Kunststoffschaum versehene Hohlwalze aus Stahl ist.

4. Einrichtung nach einem der vorhergehenden Ansprüche, dadurch gekennzeichnet, daß der wenigstens eine Druckkopf (46) während des Belegdurchlaufes motorisch in der Höhe verstellbar ist.

5. Einrichtung nach einem der vorhergehenden Ansprüche, dadurch gekennzeichnet, daß der wenigstens eine Druckkopf (46) eine Kontrolleinrichtung aufweist, die überwacht, ob die Antriebsmagnete für die jeweiligen Druckorgane (Nadeln) entsprechend ihrer Ansteuerung mit Strom beaufschlaft sind.

6. Einrichtung nach einem der vorhergehenden Ansprüche, dadurch gekennzeichnet, daß der wenigstens eine Druckkopf (46) eine Kontrolleinrichtung aufweist, die optisch oder mechanisch nachprüft, ob die entstehenden Druckorgane (Nadeln) angeschlagen haben.

7. Einrichtung nach einem der vorhergehenden Ansprüche, dadurch gekennzeichnet, daß in der Transportstrecke (16) Fühler (45) zur Abtastung der Beleggröße-Art und/oder Dicke angeordnet sind, die ggf. auch den Sortierer (21) steuern.

8. Einrichtung nach einem der vorhergehenden Ansprüche, dadurch gekennzeichnet, daß vor dem Druckkopf (46) in der Transportstrecke (16) Fühler (65) zur Ermittlung der Bedruckung der Belege (22) zumindest in der durch den Druckkopf (46) zu beschriftenden Zeile vorgesehen sind.

9. Einrichtung nach einem der vorhergehenden Ansprüche, dadurch gekennzeichnet, daß dem Druckkopf (46) eine Farbbandkassette (66) mit einem Endlos-Farbband (49) zugeordnet ist, die in der Kassette Einrichtungen zum Nachfärben des Farbbandes (49) und zwei zum seitlichen Umgreifen des Druckkopfes (46) ausgebildete, das Farbband (49) führende und einschließende Arme (48) aufweist, zwischen denen das Farbband am Druckkopf vorbeigeführt ist.

10. Einrichtung nach einem der vorhergehenden Ansprüche, dadurch gekennzeichnet, daß der Farbbandantrieb in Abhängigkeit von der Beweglaufgeschwindigkeit steuerbar ist.

11. Einrichtung nach einem der vorhergehenden Ansprüche, dadurch gekennzeichnet, daß sie in einem Belegbearbeitungsgerät (11) eingesetzt ist, in der die Druckeinrichtung (15) horizontal neben einer Positioniereinrichtung (13) angeordnet ist, die durch die Transportstrecke (16) mit der Druckeinrichtung (15) verbunden ist, wobei ggf. horizontal anschließend eine Sortier- und/oder Stapeleinrichtung vorgesehen ist.

12. Einrichtung nach einem der vorhergehenden Ansprüche, dadurch gekennzeichnet, daß eine elektronische Eingabe-und Steuereinrichtung (17) mit einer Tastatur (18), vorzugsweise abnehmbar vor dem Eingabebereich (19) der Transportstrecke (16) angeordnet ist.

13. Einrichtung nach einem der vorhergehenden Ansprüche, dadurch gekennzeichnet, daß die Druckeinrichtung (15) in Abhängigkeit von der Bedruckung der Belege (22) die Abstapelgeschwindigkeit bzw. -folge eines vorgeschalteten Abstaplers (14) steuert.

14. Einrichtung nach einem der vorhergehenden Ansprüche, dadurch gekennzeichnet, daß die Gegendruckwalze (51) zum Aufbringen einer Rückseitenbeschriftung des Beleges zumindest bereichsweise mit einem Farbauftrag zu versehen ist, und zwar vorzugsweise mittels einer Farbauftragsrolle auf die poröse oder aufgerauhte Oberfläche des Bereichs der Gegendruckwalze.

**Claims**

1. Apparatus for printing documents,

a) the printing mechanism (15) containing at least one matrix pushbutton (46) substantially fixed in the printing direction,

b) past which the documents (22) are continuously moved,

c) on a linear conveyor section (16) using at least one friction wheel pair,

d) the pushbutton (46) cooperates with a back pressure roller (51),

e) which is arranged tangentially to the conveyor section (16),

f) and the pushbutton (46) is controlled by a pulse generator (53) as a function of the document speed, characterized in that

g) the printing mechanism (15) is constructed for printing individual stacked or stitched,

h) OCR documents (22) with machine-readable characters,

i) the back pressure roller (51) is driven in rotary manner and determines the document speed,

k) and is provided with the pulse generator (53) for the pushbutton control,

l) in the conveyor section (16) in front of and behind the back pressure roller (51) is arranged in each case one friction conveyor (50) comprising a friction wheel pair (110, 111) pressed against one another and engaging the front and back of the documents (22),

m) said conveyor (50) being driven at the same circumferential speed as the back pressure roller (51),

n) that at least one pushbutton (46) is movable perpendicularly to the surface to be printed,

o) and adjustable by means of at least one sensing roller (58) which presses the document against the back pressure roller (51) and moves in the document conveying direction (20) to the correct printing gap with respect to roller (51) in accordance with the document thickness.

2. Apparatus according to claim 1, characterized in that the friction conveyors (50) have in each case two superimposed friction wheel pairs (110, 111), that in each case one friction wheel (111) of each pair is driven and the other friction wheel (110) is freely rotatable, and that the two freely rotatable friction wheels (110) are mounted in gimbal-like manner on a swivel support (91).

3. Apparatus according to one of the preceding claims, characterized in that the back pressure roller (51) is preferably a steel hollow roller, provided with an expanded foam filling.

4. Apparatus according to one of the preceding claims, characterized in that the at least one pushbutton (46) is vertically adjustable by a motor during the passage of the document.

5. Apparatus according to one of the preceding claims, characterized in that the at least one pushbotton (46) has a control device, which monitors whether the drive magnets for the particular printing members (needles) are supplied with current in accordance with their control.

6. Apparatus according to one of the preceding claims, characterized in that the at least one pushbutton (46) has a control device, which establishes optically or mechanically whether the printing members (needles) have operated.

7. Apparatus according to one of the preceding claims, characterized in that sensors (45) for scanning the document size, type and/or thickness and which optionally also control the sorter (21) are arranged in the conveyor section (16).

8. Apparatus according to one of the preceding claims, characterized in that sensors (65) for determining the printing of the documents (22), at least in the line to be inscribed by the pushbutton (46) are provided in the conveyor section (16) in front of said pushbutton (46).

9. Apparatus according to one of the preceding claims, characterized in that with the pushbutton (46) is associated an ink ribbon cassette (66) with a continuous ink ribbon (49), having in the cassette means for the re-inking of the ink ribbon (49) and two arms (48) for laterally engaging round the pushbutton (46), whilst guiding and enclosing the ink ribbon (49), the ink ribbon being moved past the pushbutton between said arms.

10. Apparatus according to one of the preceding claims, characterized in that the ink ribbon device is controllable as a function of the speed of movement.

11. Apparatus according to one of the preceding claims, characterized in that it is used in a document processing device (11), in which the printing mechanism (15) is arranged horizontally alongside a positioning device (13), which is connected to the printing mechanism (15) by the conveyor section (16), a sorting and/or stacking mechanism optionally horizontally following onto the same.

12. Apparatus according to one of the preceding claims, characterized in that an electronic feed-in and control mechanism (17) with a keyboard (18) is arranged in a preferably removable manner in front of the feed-in region (19) of conveyor section (16).

13. Apparatus according to one of the preceding claims, characterized in that the printing mechanism (15) controls the destacking speed or sequence of an upstream-connected destacker (14) as a function of the printing of the documents (22).

14. Apparatus according to one of the preceding claims, characterized in that ink is applied at least zonally to the back pressure roller (51) for printing the back of the document and this preferably takes place by means of an inker on the porous or roughened surface of the back pressure roller zone.

**Revendications**

1. Dispositif pour imprimer des documents,

a) dans lequel le dispositif d'impression (15) renferme au moins une tête d'impression (46) à matrice sensiblement immobile dans la direction d'impression,

b) en regard de laquelle les documents (22) peuvent être déplacés en défilement continu

c) sur un trajet de transport (16) rectiligne en utilisant au moins une paire de galets de friction,

d) dans lequel la tête d'impression (46) coopère avec un cylindre de contre-pression (51)

e) qui est placé tangentiellement au trajet de transport (16), et

f) dans lequel la tête d'impression (46) peut être commandée par un générateur d'impulsions (53) en fonction de la vitesse de défilement des documents,
caractérisé par le fait:

g) que le dispositif d'impression (15) est réalisé pour imprimer des documents OCR (22) individuels sous forme de piles ou de brochures

h) avec des caractères lisibles à la machine,

i) qu le cylindre de contre-pression (51) est entraîné en rotation et détermine la vitesse des documents et

k) est doté du générateur d'impulsions (53) pour la commande de la tête d'impression,

l) que, sur le trajet de transport (16), devant et derrière le cylindre de contre-pression (51), est disposé à chaque fois un transporteur à friction (50) qui, comprenant au moins une paire de galets de friction (110, 111) pressés l'un contre l'autre et saisissant les bords antérieurs et postérieurs des documents (22),

m) est entraîné à la même vitesse périphérique que le cylindre de contre-pression (51), et

n) que la tête d'impression (46), au moins au nombre de un, peut être déplacée perpendiculairement à la surface devant être imprimée

o) et peut être ajustée à l'intervalle d'impression correct par rapport au cylindre de contre-pression (51), d'une manière correspondant à l'épaisseur du document, par au moins un galet palpeur (58) qui presse le document contre le cylindre de contre-pression (51) et qui se déplace dans la direction (20) de transport des documents.

2. Dispositif selon la revendication 1, caractérisé par le fait que les transporteurs à friction (50) présentent deux paires respectives de galets de friction (110, 111) superposées et mutuellement en contact, que l'un respectif (111) des galets de friction de chaque paire est mené et l'autre galet de friction (110) est à rotation libre, et que les deux galets de friction (110) tournant librement sont montés à la Cardan sur un support pivotant (91).

3. Dispositif selon l'une des revendications précédentes, caractérisé par le fait que le cylindre de contre-pression (51) est un cylindre creux en acier muni de préférence d'un garnissage interne en mousse de matière plastique.

4. Dispositif selon l'une des revendications précédentes, caractérisé par le fait que la tête d'impression (46), au moins au nombre de un, peut être réglée en hauteur par un moteur lors du défilement des documents.

5. Dispositif selon l'une des revendications précédentes, caractérisé par le fait que la tête d'impression (46), au moins au nombre de un, présente un dispositif de contrôle qui surveille si les aimants d'entraînement des organes d'impression respectifs (aiguilles) sont sollicités par du courant d'une manière correspondant à leur commande.

6. Dispositif selon l'une des revendications précédentes, caractérisé par le fait que la tête d'impression (46), au moins au nombre de un, présente un dispositif de contrôle qui vérifie optiquement ou mécaniquement si les organes d'impression (aiguilles) ainsi formés ont effectué une frappe.

7. Dispositif selon l'une des revendications précédentes, caractérisé par le fait que, sur le trajet de transport (16), sont disposés des détecteurs (45) pour reconnaître la nature et/ou l'épaisseur de la taille des documents, qui commandent éventuellement aussi la trieuse (21).

8. Dispositif selon l'une des revendications précédentes, caractérisé par le fait que, avant la tête d'impression (46) sur le trajet de transport (16), sont prévus des détecteurs (65) pour reconnaître l'impression des documents (22) au moins sur la ligne devant être revêtue d'une inscription par la tête d'impression (46).

9. Dispositif selon l'une des revendications précédentes, caractérisé par le fait que, à la tête d'impression (46), est associée une cassette (66) de bande encreuse avec une bande encreuse sans fin (49), qui, dans la cassette, comporte des dispositifs pour réencrer la bande encreuse (49) et deux bras (48) agences pour entourer latéralement la tête d'impression (46), guidant et emprisonnant la bande encreuse (49) et entre lesquels la bande encreuse est déplacée en regard de la tête d'impression.

10. Dispositif selon l'une des revendications précédentes, caractérisé par le fait que l'entraînement de la bande encreuse peut être commandé en fonction de la vitesse de défilement des documents.

11. Dispositif selon l'une des revendications précédentes, caractérisé par le fait qu'il est placé dans un appareil (11) de traitement de documents dans lequel le dispositif d'impression (15) est agencé horizontalement à côté d'un dispositif de positionnement (13) qui est relié par le trajet de transport (16) au dispositif d'impression (15), un dispositif de triage et/ou d'empilement horizontalement adjacent étant éventuellement prévu.

12. Dispositif selon l'une des revendications précédentes, caractérisé par le fait qu'un dispositif électronique (17) d'entrée et de commande avec un clavier (18) est placé de préférence amovible devant la zone d'introduction (19) du trajet de transport (16).

13. Dispositif selon l'une des revendications précédentes, caractérisé par le fait que le dispositif d'impression (15) commande, en fonction de l'impression des documents (22), la vitesse ou la séquence de distribution d'un distributeur (14) situé en amont.

14. Dispositif selon l'une des revendications précédentes, caractérisé par le fait que, pour apposer une inscription au verso du document, le cylindre de contre-pression (51) est à munir au moins sur une région d'une application d'encre, et cela de préférence au moyen d'un rouleau déposeur d'encre sur la surface poreuse ou rendue rugueuse de la région du cylindre de contre-pression.

FIG.1

FIG. 2

FIG. 3

FIG. 4

0 019 080

# FIG.5

0 019 080